# EUROPEAN PATENT APPLICATION

(11) **EP 4 059 894 A1**
(43) Date of publication of application: **21.09.2022**
(21) Application number: 22160838.3
(22) Date of filing: 08.03.2022
(51) Int. Cl.: C01G 49/00

(54) **ACTIVE MATERIAL AND FLUORIDE ION BATTERY**

(30) Priority: 16.03.2021 JP 2021042171; 29.11.2021 JP 2021193515
(71) Applicant: TOYOTA JIDOSHA KABUSHIKI KAISHA, Toyota-shi, Aichi-ken, 471-8571 (JP); Kyoto University, Sakyo-ku Kyoto-shi Kyoto 606-8501 (JP)
(72) Inventor: MIKI, Hidenori, Toyota-shi, 471-8571 (JP); UCHIMOTO, Yoshiharu, Kyoto-shi, 606-8501 (JP); YAMAMOTO, Kentaro, Kyoto-shi, 606-8501 (JP)
(74) Representative: J A Kemp LLP

(57) **Abstract**

A main object of the present disclosure is to provide a new active material that can be used in a fluoride ion battery. The present disclosure achieves the object by providing an active material to be used in a fluoride ion battery, the active material characterized by comprising: a crystal phase including an infinite layer structure, and represented by AₚB_{q}Oᵣ, provided that A is at least one of an alkali earth metal element and a rare earth element, B is a transition metal element, p satisfies 0.8 ≤ p ≤ 1, q satisfies 0.8 ≤ q ≤ 1, and r satisfies 1.5 ≤ r ≤ 2.5.

## Description

### Technical Field

The present disclosure relates to an active material and a fluoride ion battery.

### Background Art

As high-voltage and high-energy density batteries, for example, Li ion batteries are known. Li ion batteries are cation-based batteries using Li ions as a carrier. Meanwhile, as anion-based batteries, fluoride ion batteries using fluoride ions as a carrier are known.

For example, Patent Literature 1 discloses an active material comprising a crystal phase including a layered Perovskite structure as an active material used for a fluoride ion battery.

### Citation List

### Patent Literature

Patent Literature 1: Japanese Patent Application Laid-Open (JP-A) No. 2017-143044

### Summary of Disclosure

### Technical Problem

In order to improve the performance of a fluoride ion battery, a new active material has been demanded. The present disclosure has been made in view of the above circumstances, and a main object thereof is to provide a new active material that can be used in a fluoride ion battery.

### Solution to Problem

In order to achieve the object, the present disclosure provides an active material to be used in a fluoride ion battery, the active material comprising: a crystal phase including an infinite layer structure, and represented by AₚB_{q}Oᵣ, provided that A is at least one of an alkali earth metal element and a rare earth element, B is a transition metal element, p satisfies 0.8 ≤ p ≤ 1, q satisfies 0.8 ≤ q ≤ 1, and r satisfies 1.5 ≤ r ≤ 2.5.

According to the present disclosure, an active material comprising a crystal phase including an infinite structure layer and a specified composition, has been newly found to work as the active material in the fluoride ion battery.

In the disclosure, a ratio p/q, which is the ratio of the p with respect to the q, may be 1.

In the disclosure, a ratio p/q, which is the ratio of the p with respect to the q, may be less than 1.

The present disclosure also provides an active material to be used in a fluoride ion battery, the active material comprising: a crystal phase including an infinite layer structure, and including A, which is at least one of an alkali earth metal element and a rare earth element, B, which is a transition metal element, and O; wherein the crystal phase includes a peak at the position of 2θ = 32.1°± 1.0°, 2θ = 35.1°± 1.0°, 2θ = 46.0°± 1.0°, and 2θ = 59.1°± 1.0° in an X-ray diffraction measurement using a CuKα-ray.

According to the present disclosure, an active material comprising a crystal phase including an infinite layer structure as well as XRD peaks at the specified position, has been newly found to work as an active material in a fluoride ion battery.

The present disclosure also provides an active material to be used in a fluoride ion battery, the active material comprising: a crystal phase including an infinite layer structure, and including A, which is at least one of an alkali earth metal element and a rare earth element, B, which is a transition metal element, and O; wherein the crystal phase includes a peak at the position of 2θ = 32.9°± 1.0°, 2θ = 36.0°± 1.0°, 2θ = 43.6°± 1.0°, and 2θ = 56.4°± 1.0° in an X-ray diffraction measurement using a CuKα-ray.

According to the present disclosure, an active material comprising a crystal phase including an infinite layer structure as well as XRD peaks at the specified position, has been newly found to work as an active material in a fluoride ion battery.

In the disclosure, the A may be at least one kind of Ca, Sr, Ba, La and Ce.

In the disclosure, the B may be at least one kind of Fe, Ni and Cu.

In the disclosure, the B may be Fe.

In the disclosure, the crystal phase may be represented by CaₓSr₁₋ₓFeO₂, provided that x satisfies 0 < x < 1.

In disclosure, the x may satisfy 0.6 ≤ x < 1.

In the disclosure, the crystal phase may be represented by CaₚCuO₂, provided that p satisfies 0.8 ≤ p < 1.

The present disclosure also provides a fluoride ion battery comprising a cathode layer containing a cathode active material, an anode layer containing an anode active material, and an electrolyte layer formed between the cathode layer and the anode layer; wherein the cathode active material or the anode active material is the active material described above.

According to the present disclosure, usage of the above described active material allows the fluoride ion battery to have excellent capacity.

### Advantageous Effects of Disclosure

The present disclosure exhibit an effect of providing a new active material that can be used in a fluoride ion battery.

### Brief Description of Drawings

FIGS. 1A to 1C are explanatory views explaining the infinite layer structure in the present disclosure.
FIG. 2 is a schematic cross-sectional view illustrating an example of the all solid state battery in the present disclosure.
FIG. 3 is a schematic cross-sectional view showing the structure of batteries produced in Examples 1 to 6 and Comparative Examples 1 to 2.
FIGS. 4A to 4C are the results of XRD measurements of Examples 1 to 6 and Comparative Example 1.
FIGS. 5A to 5C are graphs showing the results of charge and discharge tests of Examples 1 to 6 and Comparative Examples 1 to 2.
FIG. 6 is a graph comparing the discharge capacities obtained in Examples 1 to 6 with the theoretical capacity.
FIGS. 7A and 7B are the results of XRD measurements of Example 7 and Example 8.
FIGS. 8A and 8B are graphs showing the results of charge and discharge tests of Example 7 and Example 8.

### Description of Embodiments

The active material and the fluoride ion battery in the present disclosure will be hereinafter described in details.

### A. Active material

The active material in the present disclosure comprises a crystal phase including an infinite layer structure, and including A, which is at least one of an alkali earth metal element and a rare earth element, B, which is a transition metal element, and O. The crystal phase is preferably represented by AₚB_{q}Oᵣ, provided that A and B are as described above, p satisfies 0.8 ≤ p ≤ 1, q satisfies 0.8 ≤ q ≤ 1, and r satisfies 1.5 ≤ r ≤ 2.5. Also, in an X-ray diffraction measurement using a CuKα ray, the crystal phase preferably has peaks at the specified positions.

According to the present disclosure, an active material including the specified crystal phase has been newly found to work as an active material in a fluoride ion battery. Also, the active material in the present disclosure is advantageous in its excellent capacity. In addition, the active material in the present disclosure is superior in cycle properties and rate properties since expansion and contraction of the active material due to the change of the crystal structure is restrained. Further, for example, when the crystal phase in the present disclosure contains an alkali earth metal element, a transition metal element, and an O element as the constituents, it is advantageous in its low resource risk.

As described above, it has been known that an active material comprising a crystal phase including a layered Perovskite structure (also referred to as layered Perovskite oxide) can be used in a fluoride ion battery. The layered Perovskite oxide can perform charge and discharge by the intercalation reaction of fluoride ions to interlayers, and thus the expansion and contraction of the active material due to the change of crystal structure may be restrained. For this reason, a battery using the layered Perovskite oxide may be a battery with excellent cycle properties and rate properties. Meanwhile, in the layered Perovskite oxide, a skeleton for storing fluoride ions is bulky, and thus the theoretical capacity is small.

In contrast, the inventors of the present disclosure have found out that an active material comprising a crystal phase including a later described infinite layer structure and specified elements can be used in a fluoride ion battery, and its capacity is also excellent.

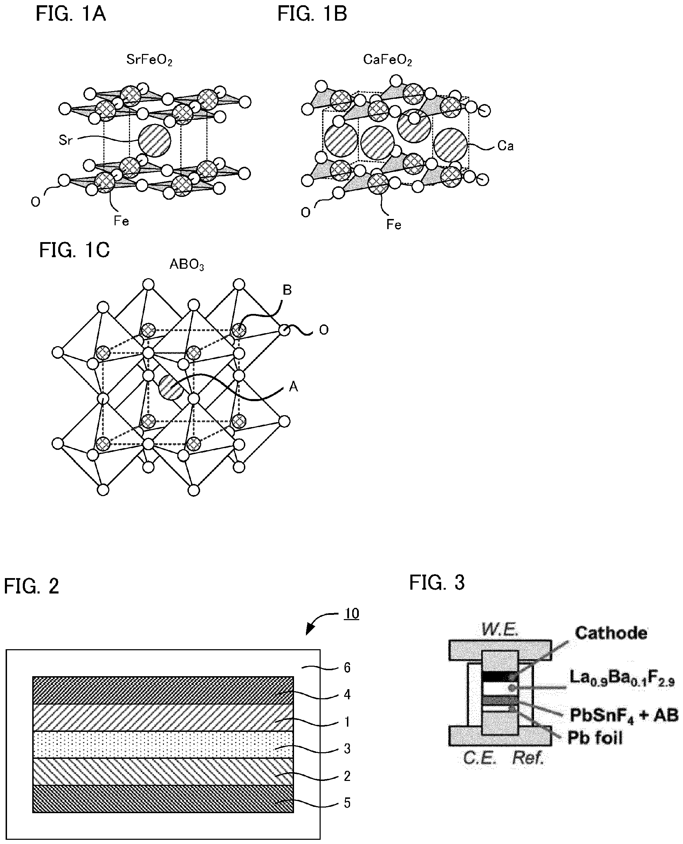

Here, an example of the infinite layer structure included in the crystal phase of the present disclosure will be explained in more details with reference to drawings. FIG. 1A shows an example of the infinite layer structure of the crystal phase represented by SrFeO₂, and FIG. 1B shows an example of the infinite layer structure of the crystal phase represented by CaFeO₂. Also, FIG. 1C shows an example of the Perovskite type structure represented by ABO₃. Incidentally, Sr and Ca in FIGS. 1A and 1B correspond to A ion in FIG. 1C, and Fe corresponds to B ion. As shown in FIGS. 1A to 1C, the infinite layer structure is a structure in which O is selectively lacked from the Perovskite structure, and is including an anion-defect site. To the active material in the present disclosure, fluoride ions are more easily intercalated due to the anion-defect site, and the dispersion path of fluoride ion is presumably formed therein.

Also, as shown in FIGS. 1A and 1B, the positions of elements vary with the kind of A ion in the infinite layer structure. For example, in FIG. 1A, the A ion is Sr, and a plane tetrahedrally coordination structure is formed. On the other hand, in FIG. 1B, the A ion is Ca, and a coordination state, in which the plane tetrahedrally coordination structure is distorted to a tetrahedron structure, is formed. This is presumably caused by the difference of ion radius between Sr and Ca. In this manner, for the presence or absence of the anion-defect site and the position of elements, the active material in the present disclosure is considered to have more excellent capacity properties compared to the Perovskite oxide. Incidentally, the infinite layer structure may be determined by, for example, an X-ray diffraction measurement (XRD measurement).

The crystal phase included in the active material in the present disclosure is preferably represented by AₚB_{q}Oᵣ, provided that A is at least one of an alkali earth metal element and a rare earth element, B is a transition metal element, p satisfies 0.8 ≤ p ≤ 1, q satisfies 0.8 ≤ q ≤ 1, and r satisfies 1.5 ≤ r ≤ 2.5.

A is at least one of an alkali earth metal element and a rare earth element. A may be just the alkali earth metal element, may be just the rare earth element, and may be both of the alkali earth metal element and the rare earth element. Also, A may be one kind of element belonging to the alkali earth metal element or the rare earth element, may be two kinds of element belonging to the alkali earth metal element or the rare earth element, and may be three kinds or more of element belonging to the alkali earth metal element or the rare earth element.

Examples of the alkali earth metal element may include Be, Mg, Ca, Sr, Ba, and Ra. Meanwhile, examples of the rare earth element may include a lanthanoid element such as La and Ce; and Sc and Y. Among them, A is preferably at least one kind of Ca, Sr, Ba, La, and Ce.

In particular, A is preferably at least one kind of Ca, Sr and Ba, and may be two kinds or more thereof. These elements have small ion radius, and thus not easily obstruct the intercalation of fluoride ions to the active material. Also, A is preferably at least one kind of Ca and Sr, and particularly preferably at least Ca. Atomic weight of Ca and Sr, particularly Ca, is small, and thus the capacity per 1 g of the active material may be large. Also, A may be at least one kind of La and Ce.

B is a transition metal element. Also, B may be one kind of element belonging to the transition metal element, may be two kinds of element belonging to the transition metal element, and may be three kinds or more of element belonging to the transition metal element. Examples of the transition metal element may include Fe, Ni, Cu, Co and Mn.

In AₚB_{q}Oᵣ, p satisfies 0.8 ≤ p ≤ 1, q satisfies 0.8 ≤ q ≤ 1, and r satisfies 1.5 ≤ r ≤ 2.5. The "p" may be 1, and may be less than 1. In the latter case, the "p" may be 0.98 or less, may be 0.95 or less, and may be 0.9 or less. Likewise, the "q" may be 1, and may be less than 1. In the latter case, the "q" may be 0.98 or less, may be 0.95 or less, and may be 0.9 or less. Also, the "r" may be 2, may be less than 2, and may be more than 2. In the disclosure, it may be: p = 1, q = 1, and r = 2. Also, in the present disclosure, it may be: 0.8 ≤ p < 1, q = 1, and r =2.

When the crystal phase included in the active material of the present disclosure is represented by AₚB_{q}Oᵣ, the rooms for oxidation reduction of the transition metal element B during the intercalation and desorption of fluoride ions may be large. Therefore, more fluoride ions may be presumably intercalated to the active material. For example, when B includes Fe, since Fe can be present as bivalent, there are much rooms for the oxidation reduction of Fe during the intercalation and desorption of fluoride ions, and more fluoride ions are presumably intercalated to the active material. As a result, the capacity is considered to be excellent. As described above, B preferably includes bivalent transition metal element as a main component. "Main component" means that the molar ratio thereof is the most. Incidentally, when Fe is used as the B ion in the Perovskite structure ABO₃, Fe is usually present in the state of tetravalent. For this reason, Fe (tetravalent) in the Perovskite structure has less rooms for the oxidation reduction compared to Fe (bivalent) in the infinite layer structure.

Also, the crystal phase is preferably represented by CaₓSr₁₋ₓFeO₂, provided that x satisfies 0 < x < 1. The "x" may be 0.4 or more, may be 0.6 or more, may be 0.7 or more, and may be 0.8 or more. Also, the "x" may be 0.95 or less, and may be 0.9 or less. Here, since the atomic weight of Ca is smaller than that of Sr, the capacity of the composition x = 1, which usually does not include Sr, is considered to be large. On the other hand, as described in Examples later, the composition containing the specified amount of Sr (0.6 ≤ x < 1) makes the active material showing the capacity equivalent to or more than that of the composition (x = 1) not including Sr. The reason therefor is not clear, but presumed to be as follows. First, in the above composition, it is presumed that CaFeO₂ and SrFeO₂ coexist. As described above, the both includes the infinite layer structure, but the spatial positions of elements are different (reference: FIGS. 1A to 1C). For this reason, coexistence of CaFeO₂ and SrFeO₂in the specified ratio in the crystal phase presumably generates distortion that facilitates the intercalation of fluoride ions to the active material.

Also, the crystal phase is preferably represented by LaₚNiO₂, provided that p satisfies 0.8 ≤ p ≤ 1. Also, the crystal phase is preferably represented by CaₚCuO₂, provided that p satisfies 0. 8 ≤ p < 1. In these compositions, the "p" may be 1, and may be less than 1. In the latter case, the "p" may be 0.98 or less, may be 0.95 or less, and may be 0.9 or less.

In the crystal phase represented by AₚB_{q}Oᵣ, the ratio p/q, which is the ratio of the p with respect to the q, may be 1, and may be less than 1. The former corresponds to the crystal phase not including defect in A site, which is referred to as crystal phase α in the present disclosure. The later corresponds to the crystal phase including defect in A site, which is referred to as crystal phase β in the present disclosure. In the crystal phase β, the "p/q" may be 0.98 or less, may be 0.95 or less, and may be 0.9 or less. Meanwhile, the "p/q" is, for example, 0.8 or more.

It is preferable that the crystal phase α includes peaks at the position of 2θ = 32.1°± 1.0°, 2θ = 35.1°± 1.0°, 2θ = 46.0°± 1.0°, and 2θ = 59.1°± 1.0° in an X-ray diffraction measurement using a CuK α-ray. Each of these peaks may shift in the range of ± 0.5°, and may shift in the range of ± 0.3°.

The crystal phase β is a crystal phase in which A site of the crystal phase α has defect. It is presumed that the crystal phase β has distorted crystal structure compared to that of the crystal phase α, while keeping the infinite layer structure. The inventors of the present disclosure have found out that the distortion of the crystal structure allows the active material to have higher capacity. It is preferable that the crystal phase β includes peaks at the position of 2θ = 32.9°± 1.0°, 2θ = 36.0°± 1.0°, 2θ = 43.6°± 1.0°, and 2θ = 56.4°± 1.0° in an X-ray diffraction measurement using a CuKα-ray.Each of these peaks may shift in the range of ± 0.5°, and may shift in the range of ± 0.3°.

The space groups of the crystal phase α and the crystal phase β may be different even when their compositions are close. For example, the space group of CaCuO₂ is P4/mmm, but the space group of Ca₁₋ₓCuO₂ (x > 0) is Fmmm.

The active material in the present disclosure may be a single phase material including just the crystal phase of the present disclosure described above, and may be a composite phase material including the crystal phase in the present disclosure and an additional crystal phase. In the latter case, the crystal phase in the present disclosure is preferably included as a main phase. "Main phase" refers to the crystal phase to which the peak with largest intensity belong in an XRD chart. When the active material includes the crystal phase in the present disclosure as a main phase, the proportion of the crystal phase in the present disclosure with respect to all the crystal phases is, for example, 50 weight% or more, may be 70 weight% or more, may be 90 weight% or more, and may be 99 weight% or more. Incidentally, examples of the additional crystal phase may include a crystal phase including a Perovskite structure.

The composition (overall composition) of the active material in the present disclosure is not particularly limited, but preferably represented by A_{P}B_{Q}O_{R}, provided that A is at least one of an alkali earth metal element and a rare earth element, B is a transition metal element, P satisfies 0.8 ≤ P ≤ 1, Q satisfies 0.8 ≤ Q ≤ 1, and R satisfies 1.5 ≤ R ≤ 2.5.

There are no particular limitations on the shape of the active material, and examples thereof may include a granular shape. Also, the average particle size (D₅₀) of the active material is, for example, 1 nm or more, and may be 10 nm or more. Meanwhile, the average particle size (D₅₀) of the active material is, for example, 100 µm or less, and may be 30 µm or less. The average particle size (D₅₀) may be calculated from, for example, a measurement with a laser diffraction particle distribution meter or a scanning electron microscope (SEM). Also, the active material in the present disclosure is usually used in a fluoride ion battery. The fluoride ion battery will be described later.

There are no particular limitations on the method for producing the active material in the present disclosure if the method allows the intended active material. The active material including the crystal phase α may be obtained by, for example, producing a precursor with a solid phase reaction, and then reducing the precursor by a reductant. In specific, by performing heat treatment to a raw material composition containing A, which is at least one of an alkali earth metal element and a rare earth element, B, which is a transition metal element, and O, a precursor represented by ABO_{y}, provided that y is more than 2, such as AFeO₃, is produced. Obtained precursor is burned in a sealed space together with a reductant such as CaH₂ to reduce the precursor, and thereby an active material including the crystal phase α is obtained. Conditions such as burning temperature and burning time may be appropriately adjusted. Also, the precursor may also be obtained by bringing the raw material composition into reaction in molten KOH.

Also, the active material including the crystal phase β may be obtained by, for example, performing heat treatment to a raw material composition containing A, which is at least one of an alkali earth metal element and a rare earth element, B, which is a transition metal element, and O, under an oxygen atmosphere once or a plurality of times. Conditions such as burning temperature, burning time, and the time of heat treatment may be appropriately adjusted.

### B. Fluoride ion battery

FIG. 2 is a schematic cross-sectional view illustrating an example of the fluoride ion battery in the present disclosure. Fluoride ion battery 10 illustrated in FIG. 2 comprises cathode layer 1 containing a cathode active material, anode layer 2 containing an anode active material, electrolyte layer 3 formed between the cathode layer 1 and the anode layer 2, cathode current collector 4 for collecting currents of the cathode layer 1, anode current collector 5 for collecting currents of the anode layer 2, and battery case 6 for storing these members. In the present disclosure, the cathode active material or the anode active material is the above described active material.

According to the present disclosure, usage of the above described active material allows the fluoride ion battery to have excellent capacity. Also, usage of the above described active material allows the fluoride ion battery to avoid resource risk.

### 1. Cathode layer

The cathode layer in the present disclosure is a layer containing at least a cathode active material. Also, the cathode layer may contain at least one of an electrolyte, a conductive material, and a binder, as required.

The cathode active material is preferably the aforementioned active material in the present disclosure. When the anode active material described later is the aforementioned active material, the cathode active material is preferably an arbitrary active material having higher potential.

There are no particular limitations on the conductive material if it has desired electron conductivity, and examples of the conductive material may include a carbon material. Examples of the carbon material may include carbon black such as acetylene black, Ketjen black, furnace black and thermal black; graphene, fullerene, and carbon nanotube. Meanwhile, there are no particular limitations on the binder if it is chemically and electronically stable, and examples of the binder may include a fluorine-based binder such as polyvinylidene fluoride (PVDF) and polytetra fluoroethylene (PTFE). The electrolyte is in the same contents as those described in "3. Electrolyte layer" later.

The content of the cathode active material in the cathode layer is not particularly limited, but preferably large from the viewpoint of capacity. The content of the cathode active material is, for example, 30 weight% or more, may be 50 weight% or more, and may be 70 weight% or more. Also, there are no particular limitations on the thickness of the cathode layer, and it may be appropriately adjusted depending on the constitution of the battery.

### 2. Anode layer

The anode layer in the present disclosure is a layer containing at least an anode active material. Also, the anode layer may contain at least one of an electrolyte, a conductive material and a binder, as required.

The anode active material is preferably the aforementioned active material in the present disclosure. When the cathode active material is the aforementioned active material, the anode active material is preferably an arbitrary active material having lower potential.

The electrolyte, the conductive material and the binder are in the same contents as those described in "1. Cathode layer" above; thus, the descriptions herein are omitted. The content of the anode active material in the anode layer is not particularly limited, but preferably large from the viewpoint of capacity. The content of the anode active material is, for example, 30 weight% or more, may be 50 weight% or more, and may be 70 weight% or more. Also, the thickness of the anode layer is not particularly limited, and may be appropriately adjusted depending on the constitution of the battery.

### 3. Electrolyte layer

The electrolyte layer in the present disclosure is a layer formed between the cathode layer and the anode layer, and contains at least an electrolyte. Also, the electrolyte layer may further contain a binder as required. The kinds of the binder are in the same contents as those described in "1. Cathode layer" above; thus, the descriptions herein are omitted. The electrolyte may be an electrolyte solution (liquid electrolyte) and may be a solid electrolyte.

Examples of the liquid electrolyte may include a liquid electrolyte containing a fluoride salt and an organic solvent. Examples of the fluoride salt may include an inorganic fluoride salt, an organic fluoride salt, and an ionic solution. Examples of the inorganic fluoride salt may include XF (X is Li, Na, K, Rb, or Cs). Examples of the cation of the organic fluoride salt may include an alkyl ammonium cation such as a tetramethyl ammonium cation. The concentration of the fluoride salt in the liquid electrolyte is, for example, 0.1 mol% or more and 40 mol% or less, and may be 1 mol% or more and 10 mol% or less.

The organic solvent in the liquid electrolyte is usually a solvent that dissolves the fluoride salt. Examples of the organic solvent may include a glyme such as triethylene glycol dimethyl ether (G3) and tetraethylene glycol dimethyl ether (G4); cyclic carbonate such as ethylene carbonate (EC), fluoroethylene carbonate (FEC), difluoroethylene carbonate (DFEC), propylene carbonate (PC), and butylene carbonate (BC); and a chain carbonate such as dimethyl carbonate (DMC), diethyl carbonate (DEC), and ethyl methyl carbonate (EMC). Also, as the organic solvent, an ionic solution may be used.

Examples of the solid electrolyte may include an inorganic solid electrolyte. Examples of the inorganic solid electrolyte may include a fluoride including a lanthanoid element such as La and Ce; a fluoride including an alkali element such as Li, Na, K, Rb, and Cs; and a fluoride including alkaline earth element such as Ca, Sr, and Ba. Specific examples thereof may include a fluoride containing La and Ba (such as La_{0.9}Ba_{0.1}F_{2.9}), and a fluoride containing Pb and Sn. The thickness of the electrolyte layer is not particularly limited, and may be appropriately adjusted depending on the constitution of the battery.

### 4. Other constitutions

The fluoride ion battery in the present disclosure preferably comprises a cathode current collector for collecting currents of the cathode layer, an anode current collector for collecting currents of the anode layer, and a battery case for storing the above described members. Examples of the shape of the current collectors may include a foil shape, a mesh shape, and a porous shape. Also, the fluoride ion battery may comprise a separator between the cathode layer and the anode layer. The reason therefor is to obtain a battery with higher safety. As the battery case, conventionally known battery cases may be used.

### 5. Fluoride ion battery

The fluoride ion battery in the present disclosure may be a primary battery and may be a secondary battery, but preferably a secondary battery among them. The reason therefor is to be repeatedly charged and discharged and useful as a car-mounted battery for example. Incidentally, the secondary battery includes a usage as a primary battery (usage for the purpose of just one time discharge after charge). Also, examples of the shape of the fluoride ion battery may include a coin shape, a laminate shape, a cylindrical shape and a square shape.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Example 1]

### <Synthesis of active material>

As raw materials, CaCO₃ and Fe₂O₃ were weighed so as to be 2 : 1 in the molar ratio, and these were mixed by ball milling. Obtained powder was molded into pellet, heat treatment at 1200°C was performed thereto for 10 hours, and thereby a precursor was obtained. Obtained precursor was made into pellet, and put in a glass tube together with the pellet of reductant CaH₂, and vacuum-sealed. This glass tube was burned at 300°C to synthesize an active material CaFeO₂.

### <Production of battery>

Using the obtained active material as a cathode active material, a battery as shown in FIG. 3 (all solid fluoride ion battery) was produced in the following matter. The active material, a solid electrolyte (La_{0.9}Ba_{0.1}F_{2.9}, fluoride ion conductive material), and a conductive material (VGCF, electron conductive material) were weighted so as to be 30 : 60 : 10 in the weight ratio, these were mixed and molded into pellet, and thereby an electrode pellet (10 mg) was obtained. Using the obtained electrode pellet as a working electrode (cathode), a solid electrolyte layer using La_{0.9}Ba_{0.1}F_{2.9} (100 mg), a layer in which PbSnF₄ and acetylene black (AB) were mixed, and a counter electrode (anode) using a Pb foil were layered and molded into compressed powder.

### [Example 2]

An active material SrFeO₂and a battery were produced in the same manner as in Example 1, except that as the raw materials, SrCo₃ and Fe₂O₃ were weighed so as to be 2 : 1 in the molar ratio.

### [Example 3]

An active material Ca_{0.8}Sr_{0.2}FeO₂ and a battery were produced in the same manner as in Example 1, except that as raw materials, CaCO₃, SrCO₃, and Fe₂O₃ were weighed so as to be 1.6 : 0.4 : 1 in the molar ratio.

### [Example 4]

An active material Ca_{0.6}Sr_{0.4}FeO₂ and a battery were produced in the same manner as in Example 1, except that as raw materials, CaCO₃, SrCO₃, and Fe₂O₃ were weighed so as to be 1.2 : 0.8 : 1 in the molar ratio.

### [Example 5]

An active material Ca_{0.4}Sr_{0.6}FeO₂ and a battery were produced in the same manner as in Example 1, except that as raw materials, CaCO₃, SrCO₃, and Fe₂O₃ were weighed so as to be 0.8 : 1.2 : 1 in the molar ratio.

### [Example 6]

An active material Ca_{0.2}Sr_{0.8}FeO₂ and a battery were produced in the same manner as in Example 1, except that as raw materials, CaCO₃, SrCO₃, and Fe₂O₃ were weighed so as to be 0.4 : 1.6 : 1 in the molar ratio.

### [Comparative Example 1]

An active material SrFeO₃ and a battery were produced in the same manner as in Example 2, except that the burning together with the reductant CaH₂ was not performed.

### [Comparative Example 2]

As raw materials, La₂O₃, SrCO₃, and Fe₂O₃ were weighed so as to be 1 : 1 : 1 in the molar ratio, and these were mixed by ball milling. Obtained powder was molded into pellet, and heat treatment at 1400°C was performed for 10 hours to produce an active material La₂SrFe₂O₇. A battery was produced in the same manner as in Example 1 except that this active material was used.

### [Evaluation]

### <XRD measurement>

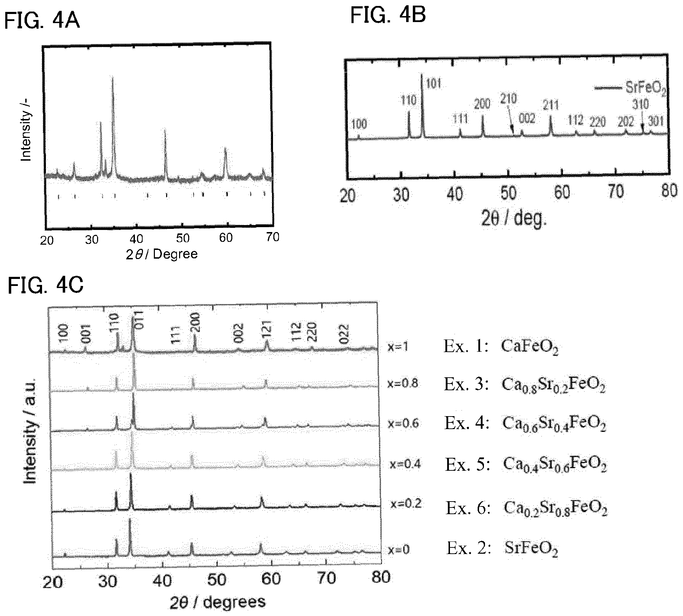

An X-ray diffraction (XRD) measurement using CuKα ray was respectively conducted to the active materials obtained in Examples 1 to 6. The result of Example 1 is shown in FIG. 4A, the result of Example 2 is shown in FIG. 4B, and results of Examples 1 to 6 are shown together in FIG. 4C. Also, representative peak positions obtained in each Example are shown in Table 1.

**[Table 1]**

| | Composition | Representative peak positions | | | |
|---|---|---|---|---|---|
| Example 1 | CaFeO₂ | 32.4° | 35.2° | 46.5° | 59.7° |
| Example 2 | SrFeO₂ | 31.6° | 34.1° | 45.4° | 58.1° |
| Example 3 | Ca_{0.8}Sr_{0.2}FeO₂ | 32.1° | 35.3° | 46.1° | 59.4° |
| Example 4 | Ca_{0.6}Sr_{0.4}FeO₂ | 32.9° | 36.1° | 46.8° | 60.1° |
| Example 5 | Ca_{0.4}Sr_{0.6}FeO₂ | 32.7° | 35.6° | 46.6° | 59.6° |
| Example 6 | Ca_{0.2}Sr_{0.8}FeO₂ | 32.6° | 35.3° | 46.4° | 59.2° |

Here, CaFeO₃, which is the Perovskite structure has been known to have characteristic peaks respectively in the vicinity of 2θ = 32.8°, 49.0°, 60.1°, and 70.2°, and SrFeO₃ has been known to have characteristic peaks respectively in the vicinity of 2θ = 32.7°, 40.5°, 47.0°, and 58.6°. Meanwhile, as shown in FIG. 4A and Table 1, characteristic peaks were observed at 2θ = 32.4°, 35.2°, 46.5°, and 59.7° in CaFeO₂ (x = 1) of Example 1. Also, as shown in FIG. 4B and Table 1, characteristic peaks were observed at 2θ = 31.6°, 34.1°, 45.4°, and 58.1° in SrFeO₂(x = 0) of Example 2. In this manner, in the active materials including the infinite layer structure, peaks not observed in the Perovskite structure were observed, at least at the position of 2θ = 35.1° ± 1.0°. Also, as shown in FIG. 4C and Table 1, it was confirmed that the active materials in all Examples 1 to 6 included the infinite layer structure.

### <Charge and discharge test>

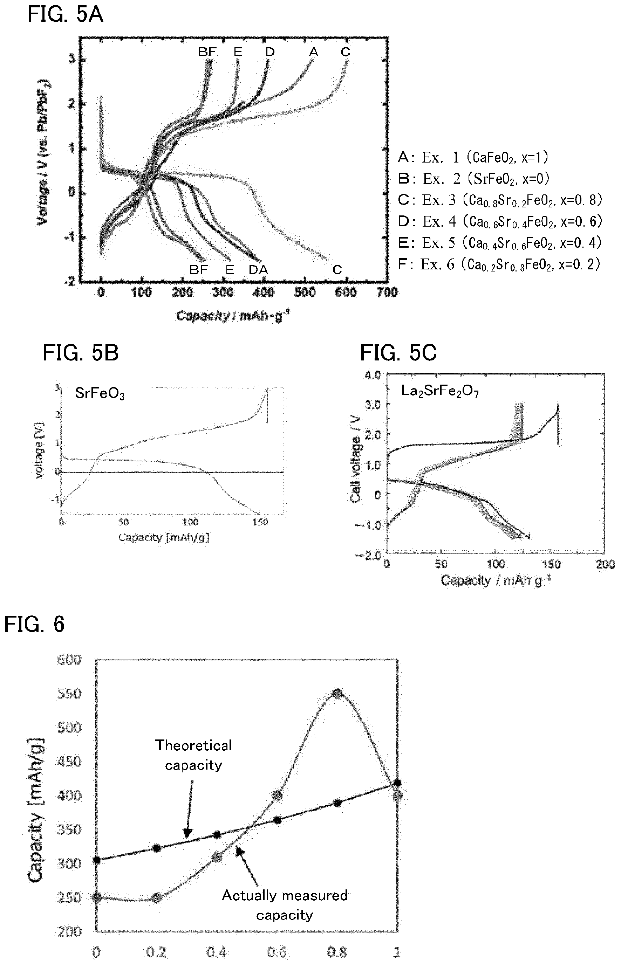

Charge and discharge tests were conducted to the batteries obtained in Examples 1 to 6 and Comparative Examples 1 to 2 respectively in a cell heated to 140°C. The condition for the charge and discharge test was constant current charge and discharge at -1.5 V to 3.0 V vs. Pb/PbF₂ and 0.03 mA. The results of Examples 1 to 6 are shown in FIG. 5A, and the results of Comparative Examples 1 to 2 are respectively shown in FIGS. 5B and 5C.

As shown in FIG. 5A, in the batteries of Examples 1 to 6, both of charge and discharge capacities were 200 mAh/g or more. Meanwhile, as shown in FIGS. 5B and 5C, in the batteries of Comparative Example 1 (SrFeO₃) and Comparative Example 2 (La₂SrFe₂O₇) , both of charge and discharge capacities did not reach to 200 mAh/g; thus, the batteries of Examples 1 to 6 had more excellent capacity properties than those of Comparative Examples 1 and 2.

Also, FIG. 6 shows the results of comparing the discharge capacities (actually measured capacity) obtained in Examples 1 to 6, with the theoretical discharge capacity (theoretical capacity) per 2 electron reactions. Here, since the atomic weight of Ca is smaller than that of Sr, the theoretical capacity of CaFeO₂ (x = 1) is better than that of SrFeO₂ (x = 0). It means that, as in the theoretical capacity shown in FIG. 6, it can be predicted that the capacity will increase linearly as the "x" increases. On the other hand, as in the actually measured capacity shown in FIG. 6, in the composition containing Sr in the specified ratio (0.6 ≤ x < 1), surprisingly, the actually measured capacity was remarkably larger than the theoretical capacity, and the capacity was equivalent or more than that of CaFeO₂ (x = 1). It is presumed that when CaFeO₂ and SrFeO₂ having different spatial positions of elements coexisted in the specified ratio, distortion that allowed fluoride ions to be easily taken into the active material was generated.

### [Example 7]

As raw materials, La₂O₃ and NiO were weighed so as to be 1 : 2 in the molar ratio, these were brought into reaction in KOH molten at 400°C for 12 hours, and thereby a precursor was obtained. Obtained precursor was made into pellet, and put in a glass tube together with the pellet of reductant CaH₂, and vacuum-sealed. This glass tube was burned at about 300°C to synthesize an active material LaNiO₂. A battery was produced in the same manner as in Example 1 except that the synthesized active material was used as the cathode active material.

### [Example 8]

As raw materials, CaCO₃ and CuO were weighed so as to be 1 : 1 in the molar ratio, and these were mixed by ball milling. Obtained powder was molded into pellet, and burned at 750°C for 20 hours under an oxygen atmosphere. After the burning, the pellet was crushed and molded into pellet again, and re-burned in the same conditions. The burning and the re-burning were repeated for 5 times, and thereby an active material Ca_{0.828}CuO₂ was synthesized. A battery was produced in the same manner as in Example 1 except that the synthesized active material was used as the cathode active material.

### [Evaluation]

### <XRD measurement>

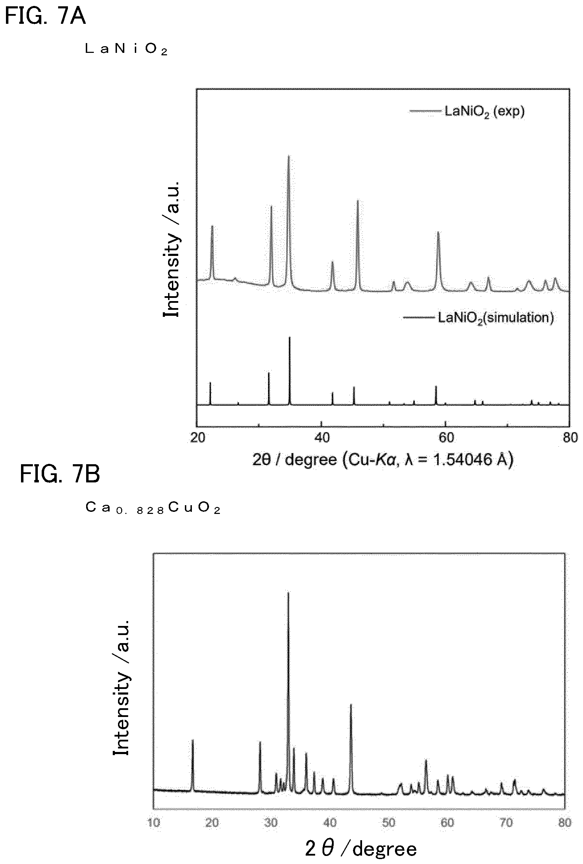

An X-ray diffraction (XRD) measurement using CuKα ray was respectively conducted to the active materials obtained in Example 7 and Example 8. The result of Example 7 is shown in FIG. 7A, and the result of Example 8 is shown in FIG. 7B.

As shown in FIG. 7A, characteristic peaks were observed at 2θ = 22.5°, 32.0°, 34.8°, 41.8°, 45.9°, and 58.9° in LaNiO₂ of Example 7. These are almost equal to the peak positions observed in SrFeO₂ of Example 2.

Meanwhile, as shown in FIG. 7B, characteristic peaks were observed at 2θ = 16.7°, 28.2°, 32.9°, 33.9°, 36.0°, 43.6°, and 56.4° in Ca_{0.828}CuO₂ of Example 8. These were slightly different from the peak positions observed in SrFeO₂ of Example 2. It is presumed that the composition had a stable structure which was slightly shifted from the CaCuO₂ composition, and the plane of CuO₄ was distorted in that stable structure. Also, the sample synthesized in Example 8 included a little amount of CaO as a side phase.

### <Charge and discharge test>

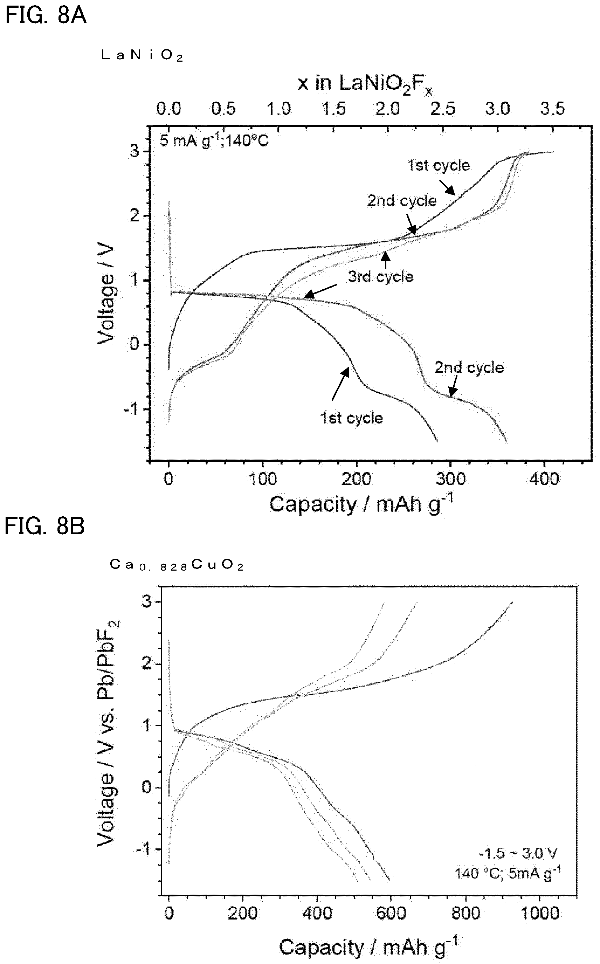

Charge and discharge tests were conducted to the batteries obtained in Example 7 and Example 8, in the same manner as in Examples 1 to 6 and Comparative Examples 1 to 2. The result of Example 7 is shown in FIG. 8A, and the result of Example 8 is shown in FIG. 8B.

As shown in FIG. 8A, both of charge and discharge capacities of the battery in Example 7 were 200 mAh/g or more similarly to those of Examples 1 to 6, and the high capacity was confirmed. In specific, although there was a little irreversible capacity in the first cycle, in the second cycle, the discharge capacity of about 360 mAh/g corresponding to about 3 electron reactions was confirmed. Also, although the active material of Example 8 had a distorted infinite layer structure, high capacity was confirmed as shown in FIG. 8B.

### Reference Signs List

- 1: cathode layer
- 2: anode layer
- 3: electrolyte layer
- 4: cathode current collector
- 5: anode current collector
- 6: battery case
- 10: fluoride ion battery

## Claims

1. An active material to be used in a fluoride ion battery, the active material **characterized by** comprising:
a crystal phase including an infinite layer structure, and represented by AₚB_{q}Oᵣ, provided that A is at least one of an alkali earth metal element and a rare earth element, B is a transition metal element, p satisfies 0.8 ≤ p ≤ 1, q satisfies 0.8 ≤ q ≤ 1, and r satisfies 1.5 ≤ r ≤ 2.5.

2. The active material according to claim 1, **characterized in that** a ratio p/q, which is the ratio of the p with respect to the q, is 1.

3. The active material according to claim 1, **characterized in that** a ratio p/q, which is the ratio of the p with respect to the q, is less than 1.

4. An active material to be used in a fluoride ion battery, the active material **characterized by** comprising:
a crystal phase including an infinite layer structure, and including A, which is at least one of an alkali earth metal element and a rare earth element, B, which is a transition metal element, and O; wherein
the crystal phase includes a peak at the position of 2θ = 32.1°± 1.0°, 2θ = 35.1°± 1.0°, 2θ = 46.0°± 1.0°, and 2θ = 59.1°± 1.0° in an X-ray diffraction measurement using a CuKα-ray.

5. An active material to be used in a fluoride ion battery, the active material **characterized by** comprising:
a crystal phase including an infinite layer structure, and including A, which is at least one of an alkali earth metal element and a rare earth element, B, which is a transition metal element, and O; wherein
the crystal phase includes a peak at the position of 2θ = 32.9°± 1.0°, 2θ = 36.0°± 1.0°, 2θ = 43.6°± 1.0°, and 2θ = 56.4°± 1.0° in an X-ray diffraction measurement using a CuKα-ray.

6. The active material according to any one of claims 1 to 5, **characterized in that** the A is at least one kind of Ca, Sr, Ba, La and Ce.

7. The active material according to any one of claims 1 to 6, **characterized in that** the B is at least one kind of Fe, Ni and Cu.

8. The active material according to any one of claims 1 to 7, **characterized in that** the B is Fe.

9. The active material according to claim 1 or 4, **characterized in that** the crystal phase is represented by CaₓSr₁₋ₓFeO₂, provided that x satisfies 0 < x < 1.

10. The active material according to claim 9, **characterized in that** the x satisfies 0. 6 ≤ x < 1.

11. The active material according to any one of claims 1 or 5, **characterized in that** the crystal phase is represented by CaₚCuO₂, provided that p satisfies 0.8 ≤ p < 1.

12. A fluoride ion battery comprising a cathode layer containing a cathode active material, an anode layer containing an anode active material, and an electrolyte layer formed between the cathode layer and the anode layer; **characterized in that**
the cathode active material or the anode active material is the active material according to any one of claims 1 to 11.
